# EUROPEAN PATENT SPECIFICATION

(11) **EP 0 988 999 B1**
(45) Date of publication and mention of the grant of the patent: **09.06.2004**
(21) Application number: 99118887.1
(22) Date of filing: 24.09.1999
(51) Int. Cl.: B60C 17/00, C08K 5/3415, C08L 21/00

(54) **Antireversion agent for inserts used in runflat tires**
Reversion verhinderndes Mittel für Einsätze in Notlaufreifen
Agent antiréversion pour inserts utilisés dans des pneus pour roulage à plat

(30) Priority: 25.09.1998 US 160597
(43) Date of publication of application: 29.03.2000
(73) Proprietor: THE GOODYEAR TIRE & RUBBER COMPANY, Akron, Ohio 44316-0001 (US)
(72) Inventor: Beers, Roger Neil, Uniontown, Ohio 44685 (US); Benko, David Andrew, Munroe Falls, Ohio 44262 (US); Wolski, Thomas Paul, Fairlawn, Ohio 44333 (US)
(74) Representative: Barz, Peter

(56) References cited:
- EP-A- 0 509 295
- EP-A- 0 823 453
- WO-A-93/23467

## Description

### Technical Field

This invention relates to a runflat tire that is capable of being used after total loss of air pressure, other than ambient atmospheric pressure. In other words, the tire can be used in an uninflated condition, such as after being punctured.

### Background of the Invention

Various tire constructions have been suggested for pneumatic runflat tires; that is, tires capable of being used while uninflated (with total loss of air pressure other than ambient atmospheric pressure). A vehicle equipped with such tires can continue to be driven after the tire experiences loss of pneumatic pressure, such as loss of air pressure caused by puncture or valve failure. This is highly desirable since it allows vehicles equipped with such runflat tires to continue in operation until they reach a location where the tire can be repaired or replaced. Tires of this type are sometimes also referred to as extended mobility tires (EMT).

One approach to manufacturing a pneumatic runflat tire is described in United States Patent 4,111,249 which is entitled "Banded Tire." This approach involves providing a hoop or annular band directly under and approximately as wide as the tread. The hoop in combination with the rest of the tire structure is reported to be capable of supporting the weight of the vehicle while the tire is in an uninflated condition. This banded tire actually tensions the ply cords even while it is in an uninflated state.

Another approach described in European Patent Publication No. 0-475-258A1 which discloses a tire according to the preamble of claim 1 is to simply strengthen the tire sidewalls by increasing the cross-sectional thickness thereof. When such tires are operated in the uninflated condition, it places the sidewalls of the tire in compression. Heat buildup can lead to tire failure in such tires due to the large amounts of rubber required to stiffen the sidewall in cases where this approach is taken. This is especially true when the tire is operated for prolonged periods at high speeds in the uninflated condition.

United States Patent 5,368,082 discloses the first commercially accepted runflat pneumatic radial ply tire, the Eagle® GSC-EMT tire introduced by The Goodyear Tire & Rubber Company. This tire was accepted as an equipment option for the 1994 Chevrolet Corvette automobile. United States Patent 5,368,082 teaches the employment of special sidewall inserts to improve stiffness. Approximately six additional pounds (6.7 kg) of weight per tire was required to support an 800-lb (363 kg) load on this uninflated tire. These runflat tires had a very low aspect ratio. This earlier invention, although superior to prior attempts, still imposed a weight penalty per tire that could be offset by the elimination of a spare tire and the tire jack. This weight penalty was even more problematic when engineers attempted to build higher aspect ratio tires for large luxury touring sedans. The required supported weight for an uninflated luxury car tire approximates 1400 pounds (610 kg) of load. These taller sidewalled tires having aspect ratios in the 55 percent to 65 percent range or greater means that the working loads were several times that of the earlier 40 percent aspect ratio runflat tires developed for the Corvette automobile. Such loads meant that the sidewalls and overall tire had to be stiffened to the point of compromising ride. Luxury vehicle owners simply will not sacrifice ride quality for runflat capability.

The goal of engineering has been to develop a runflat tire without compromising ride or performance. In sports cars having relatively stiff suspension characteristics, the ability to provide such a runflat tire was comparatively easy as compared to providing such tires for luxury sedans that demand softer ride characteristics. Light truck and sport utility vehicles, although not as sensitive to ride performance, typically utilize tires having a relatively high aspect ratio which makes the requirements for the runflat tire more challenging.

An equally important design consideration in the development of a runflat tire is insuring that the uninflated tire remains seated on the rim. Solutions have been developed employing bead restraining devices as well as special rims to accomplish this requirement. Alternatively, the Eagle GSC-EMT tire employed a new bead configuration enabling the tire to function on standard rims without requiring additional bead restraining devices.

United States Patent 5,427,166 and United States Patent 5,511,599 disclose tires wherein a third ply and a third insert in the sidewall are used to further increase runflat performance over a basic design disclosed in United States Patent 5,368,082. These patents disclose the concept of including additional plies and inserts in a tire sidewall to attain improved runflat performance characteristics.

United States Patent 5,685,927 discloses a runflat tire which provides a higher aspect ratio with the employment of load-supporting bead cores placed directly under the tread belt package of the tire. Runflat tires made utilizing this approach are very promising in load support and ride quality. However, this approach leads to higher rolling resistance which decreases fuel economy even during periods when the tire is used under normal conditions at standard inflation pressure.

United States Patent 5,535,800 discloses the use of elastomeric-covered composite ribs that in combination with a radial ply can provide excellent runflat capability in a wide range of tire applications.

In the case of runflat tires made utilizing stiff inserts, the insert carries most of the load on the tire during periods of operation after loss of air pressure. This leads to the generation of heat. Heat build-up can then lead to thermal degradation in the insert. A reduction in crosslink density and a change in the distribution of crosslink types is the result of this thermal degradation. Thermal degradation can accordingly lead to failure of the insert. This failure limits the range over which the runflat tire can be used during periods of operation after air loss.

United States Patent 5,623,007 discloses that the reversion resistance of sulfur-cured carcass rubber compounds in aircraft tires can be greatly improved by incorporating, as antireversion agents, 1.5-6 phr of a mixture of zinc salts of one or more aliphatic carboxylic acids and one or more monocyclic aromatic acids and 0.8-2 phr of a bis-citraconimido compound. Much greater reversion resistance is reported to be obtained with a combination of the two anti-reversion agents than with either antireversion agent alone.

### Summary of the Invention

This invention is based upon the discovery that thermal degradation in the inserts of runflat tires can be inhibited by including a bis-citraconimido compound, such as 1,3-bis(citraconimidomethyl) benzene, therein as an antireversion agent. This allows for the runflat tire to have an extended service life while being operated in the uninflated state.

The insert will generally extend radially inward from under the outer circumferential tread toward the bead to which the sidewall extends. It is normally preferred for the insert to be comprised of a cured polydiene rubber and, of course, the bis-citraconimido compound as an antireversion agent. The cured polydiene rubber can, of course, be a blend of two or more rubbery polymers. For instance, the cured polydiene rubber can be a blend of natural rubber and high cis-1,4-polybutadiene rubber.

This invention more specifically discloses a runflat tire according to claim 1. It is comprised of a generally toroidal-shaped carcass with an outer circumferential tread, two spaced beads, at least one ply extending from bead to bead and sidewalls extending radially from and connecting said tread to said beads; wherein said tread is adapted to be ground-contacting, wherein said sidewalls contain at least one insert radially inward from said ply and wherein the insert is comprised of a cured polydiene rubber, (2) a filler and (3) the bis-citraconimido compound.

The subject invention further discloses a pneumatic radial ply runflat tire having a tread, two inextensible annular beads, a carcass comprising a radial ply structure having at least one radial ply, a belt structure located between the tread and the radial ply structure and two sidewalls reinforced by one or more inserts, wherein the inserts are comprised of (1) a cured polydiene rubber, (2) a filler and (3) a bis-citraconimido compound; and wherein the tire is characterized by: (a) a tread having laterally disposed tread ribs; (b) a sidewall rib disposed near the radially outermost region of each sidewall adapted for contact with a driving surface during runflat operation and free from contact with the driving surface during operation at normal inflation pressure; (c) first decoupling grooves circumferentially disposed between the sidewall rib and the adjacent tread rib; and (d) second decoupling grooves circumferentially disposed between the tread ribs and the adjacent central region of the tread.

The present invention also reveals a pneumatic runflat tire comprised of a toroidally-shaped carcass and an outer, circumferential tread designed to be ground contacting, wherein said carcass is comprised of two spaced-apart inextensible bead portions, two spaced-apart sidewalls each individually extending radially inward from and connecting said tread to said bead portions and at least one cord reinforced ply extending from bead to bead and through the sidewalls; wherein a substantially crescent-shaped rubber insert is juxtapositioned to and axially inward of at least one of said carcass plies in each of said sidewalls of the tire; and wherein the rubber composition of said insert is comprised of (1) a cured polydiene rubber, (2) a filler and (3) a bis-citraconimido compound.

### Brief Description of the Drawings

Figure 1 is a fragmentary cross-sectional view of a tire showing its tread and carcass with one ply and one insert axially inward of the ply in the sidewall region of the tire as an embodiment of the invention.
Figure 2 is a fragmentary cross-sectional view of a tire showing its tread and carcass with two plies, a second insert interposed between the plies and a second ply axially outward of the innermost ply in the sidewall region of the tire as an embodiment of the invention.
Figure 3 is a fragmentary cross-sectional view of a tire showing its tread and carcass with three plies, inserts between the plies and another insert axially inward of the innermost ply in the sidewall region of the tire as an embodiment of the invention.

### Definitions

"Axial" and "axially," where used, means directions that are parallel to the axis of rotation of the tire.

"Bead portion" means generally that part of the tire comprising an annular inextensible tensile member such as a multiplicity of annular wires surrounded by an elastomer composition(s) and is associated with holding the tire to the rim being wrapped by ply cords and shaped, with or without other reinforcement elements such as flippers, chippers, apexes or fillers, toe guards and chaffers. The bead core usually refers to the wire beads of the bead portion but sometimes may refer to the bead portion itself.

"Belt Structure" or "Reinforcing Belts," where used, means at least two annular layers or plies of parallel cords, woven or unwoven, underlying the tread, unanchored to the bead and having both left and right cord angles in the range from 17° to 27° with respect to the equatorial plane of the tire.

"Circumferential" may be used in the description to relate to a direction extending along (around) the outer perimeter of the surface of the tire carcass such as, for example, the circumferential tread on the carcass.

"Carcass" means the tire structure apart from the tread but including supporting plies, sidewalls and the beads or bead portions.

"Chafers," where used herein, refers to narrow strips of material placed around the outside of the bead to protect cord plies from the rim and distribute flexing above the rim.

"Cord" means one of the reinforcement strands of which the plies in the tire are comprised.

"Innerliner," where used herein, means the layer or layers of elastomer or other material that form the inside surface of a tubeless tire and that contain the inflating fluid within the tire.

"Ply" means a layer of rubber-coated parallel cords.

"Radial" and "radially" mean directions radially toward or away from the axis of rotation of the tire.

"Radial Ply Tire," if used herein, means a belted or circumferentially-restricted pneumatic tire in which at least one ply has cords which extend from bead to bead are laid at cord angles between 65° and 90° with respect to the equatorial plane of the tire.

"Shoulder," if used herein, means the upper portion of sidewall just below the tread edge.

"Sidewall" means that portion of a tire between the tread and the bead.

### Detailed Description of the Invention

The tire inserts of this invention are comprised of at least one cured rubbery polymer and a bis-citraconimido compound as an antireversion agent. The tire insert will also generally contain at least one filler, such as carbon black or silica. The bis-citraconimido compound will typically be present in an amount which is within the range of about 0.1 phr to about 10 phr. It is normally preferred for the bis-citraconimido compound to be present in an amount which is within the range of about 0.5 phr to about 5 phr. The bis-citraconimido compound will most preferably be present in an amount which is within the range of about 1 phr to about 3 phr.

The rubbery polymer will typically be one or more polydiene rubbers, such as natural rubber, polybutadiene rubber, polyisoprene rubber, isoprene-butadiene rubber, styrene-butadiene rubber, styrene-isoprene-butadiene rubber or styrene-isoprene rubber. In some cases, it is preferred to use a blend of natural rubber and high cis-1,4-polybutadiene rubber. Such blends will typically contain 60 phr to 90 phr of natural rubber and 10 phr to 40 phr of high cis-1,4-polybutadiene. Blends of this type will preferably contain 75 phr to 85 phr of natural rubber and 15 phr to 25 phr of high cis-1,4-polybutadiene rubber.

The bis-citraconimido compounds that can be used are typically of the structural formula: A-T-(R)ₙ, wherein n is an integer from 1 to 3, wherein T represents a divalent, trivalent or tetravalent group containing at least one carbon atom and wherein A and R can be the same or different and have a structural formula selected from the group consisting of 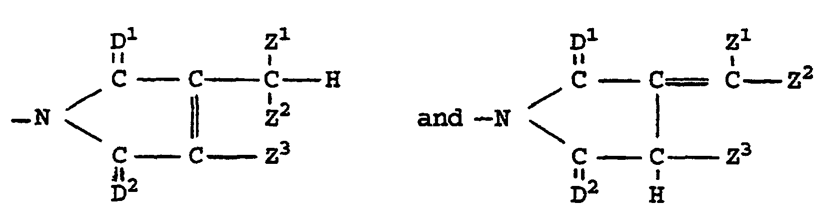 wherein Z¹, Z² and Z³ can be the same or different and are selected from the group consisting of hydrogen atoms, alkyl groups containing from 1 to about 18 carbon atoms, cycloalkyl groups containing from 3 to about 18 carbon atoms, aryl groups containing from 6 to about 18 carbon atoms and alkaryl groups containing from 7 to about 30 carbon atoms; and wherein D¹ and D² can be the same or different and are selected from the group consisting of oxygen atoms and sulfur atoms. It should be noted that, when Z¹ is a hydrogen atom, Z² and Z³ can combine to form a ring.

In the bis-citraconimido compounds of the structural formula A-T-(R)ₙ, it is preferred for n to be 2 with T representing a bivalent hydrocarbon group containing only carbon and hydrogen atoms, such as an alkylene group, an arylene group or an aralkylene group. It is typically preferred for T to contain from about 4 to about 12 carbon atoms with 1,3-phenylene groups being highly preferred. It is also preferred for A and R to be the same and for A and R to be of the structural formula: 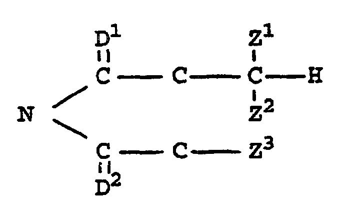 wherein D¹ and D² represent oxygen atoms. Z¹, Z² and Z³ will typically represent hydrogen atoms or alkyl groups containing from 1 to about 4 carbon atoms. It is highly preferred for Z1, Z2 and Z3 to represent hydrogen atoms or methyl groups.

In the practice of this invention, it is highly preferred to utilize 1,3-bis(citraconimidomethyl) benzene as the bis-citraconimido compound. It is sold by Flexsys under the tradename Perkalink™ 900, has a melting point of 87°C and has the structural formula:

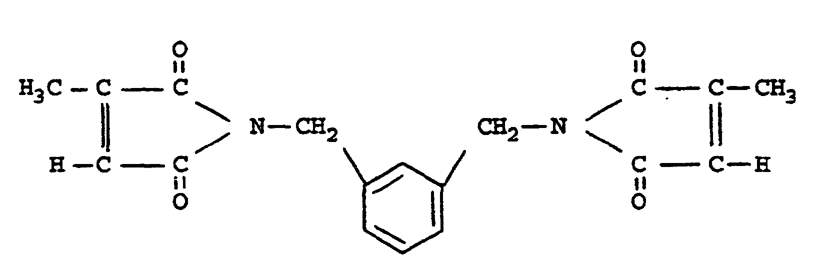

In a preferred embodiment of this invention, the insert is comprised of (1) a cured polydiene rubber that is coupled with tin, lead, germanium or silica, (2) a filler, (3) a fatty acid and (4) a bis-citraconimido compound. Such tire insert compositions will normally contain from about 20 phr (parts by weight per 100 parts of rubber) to about 130 phr of the filler, from 0.1 phr to about 5 phr of the fatty acid and from 0.1 phr to 10 phr of the bis-citraconimido compound. It is typically preferred for such tire insert compound to contain from about 30 phr to about 110 phr of the filler, from about 0.4 phr to about 3 phr of the fatty acid and from 0.5 to 4 phr of the bis-citraconimido compound. It is generally more preferred for the tire insert to contain from 70 phr to 90 phr of the filler, from 0.5 phr to 1.5 phr of the fatty acid and from 1 to 3 phr of the bis-citraconimido compound.

The filler will normally be carbon black, silica or a combination of carbon black and silica. The fatty acid can be virtually any fatty acid that is soluble in the coupled rubber. In most cases, for economic reasons, it is preferred to use a mixture of fatty acids. A preferred mixture of fatty acids contains 40 percent to 50 percent oleic acid, 30 percent to 40 percent linoleic acid, 2 percent to 6 percent stearic acid, 2 percent to 6 percent rosin acids and 10 percent to 20 percent of other fatty acids. Such fatty acids are normally of the formula RCOOH wherein R represents an alkyl group or an unsaturated hydrocarbon containing from about 16 to about 20 carbon atoms. In addition to the coupled polydiene rubber, the insert can be further comprised of natural rubber. In some cases, it is advantageous to utilize a blend that contains from about 10 phr to about 70 phr of natural rubber, based upon the total amount of rubber in the blend.

The coupled polydiene rubber can be made by anionic polymerization wherein the polymerization is terminated by the addition of a Group VIa metal coupling agent, such as a tin tetrahalide. The anionic polymerization is initiated with a Group I or II metal, such as lithium, and is carried out for a length of time sufficient to permit substantially complete polymerization of monomers. In other words, the polymerization is normally carried out until high conversions are attained. Then, the coupling agent is added to couple the living rubbery polymer which, of course, terminates the polymerization.

The coupling agent will typically be Group IVa metal halide, such as a tin halide, a lead halide, a germanium halide or a silicon halide. The halogen in the coupling agent will typically be fluorine, chlorine, bromine or iodine. In most cases, the halogen will be selected from the group consisting of fluorine, chlorine and bromine with chlorine being preferred. Tin coupling agents, such as tin tetrachloride, tin tetrabromide, tin tetrachloride and tin tetraiodide are normally preferred. The coupling agent will normally be a tetrahalide. However, trihalides or dihalides can also be used. In cases where tin dihalides are utilized, a linear polymer rather than a branched polymer results. To induce a higher level of branching, tin tetrahalides are normally preferred.

Broadly, and exemplarily, a range of about 0.01 to 4.5 milliequivalents of the coupling agent is employed per 100 grams of the rubbery monomer. It is normally preferred to utilize about 0.01 to about 1.5 milliequivalents of the coupling agent per 100 grams of monomer to obtain the desired Mooney viscosity. The larger quantities tend to result in production of polymers containing terminally reactive groups or insufficient coupling. One equivalent of tin coupling agent per equivalent of lithium is considered an optimum amount for maximum branching. For instance, if a tin tetrahalide is used as the coupling agent, one mole of the tin tetrahalide would be utilized per four moles of live lithium ends. In cases where a tin trihalide is used as the coupling agent, one mole of the tin trihalide will optimally be utilized for every three moles of live lithium ends. The tin coupling agent can be added to a polymer cement containing the living rubbery polymer in a hydrocarbon solution, e.g., in cyclohexane, with suitable mixing for distribution and reaction.

The coupled rubbery polymer that can optionally be utilized in the tire insert compositions of this invention can be symmetrically or asymmetrically coupled. A technique for preparing asymmetrically tin-coupled rubbery polymers is disclosed in United States Patent US 6 271 317, published the 07 Aug. 2001. In this process, asymmetrical tin-coupled rubbery polymer having improved stability are made by a process that comprises: (1) continuously polymerizing in a first reactor at least one diene monomer to a conversion of at least about 90 percent, utilizing an anionic initiator to produce a polymer cement containing living polydiene rubber chains; (2) continuously feeding the polymer cement produced in the first reactor into a second reactor; (3) adding a tin halide to the polymer cement in a second reactor under conditions of agitation to produce a polymer cement having the tin halide homogeneously dispersed therein, wherein the residence time in the second reactor is within the range of about 15 minutes to about 4 hours; (4) continuously feeding the polymer cement having the tin halide homogeneously dispersed therein into a plug flow reactor having a residence time of about 15 minutes to about 1 hour to produce a polymer cement of the asymmetrically tin-coupled rubbery polymer; and (5) continuously withdrawing the polymer cement of the asymmetrically tin-coupled rubbery polymer from the plug flow reactor.

Some representative examples of rubbery polymers which can be asymmetrically tin-coupled include polybutadiene, polyisoprene, styrene-butadiene rubber (SBR), α-methylstyrene-butadiene rubber, α-methylstyrene-isoprene rubber, styrene-isoprene-butadiene rubber (SIBR), styrene-isoprene rubber (SIR), isoprene-butadiene rubber (IBR), α-methylstyrene-isoprene-butadiene rubber and α-methylstyrene-styrene-isoprene-butadiene rubber.

Tires containing the inserts of this invention can be comprised of a toroidally-shaped carcass and an outer, circumferential tread designed to be ground-contacting, wherein said carcass is comprised of two spaced-apart inextensible bead portions, two spaced-apart sidewalls each individually extending radially inward from and connecting said tread to said bead potions and at least one cord reinforced ply extending from bead to bead and through the sidewalls; an improvement in which a substantially crescent-shaped rubber insert is juxtapositioned to and axially inward of at least one of said carcass plies in each of said sidewalls of the tire.

It is to be appreciated that the insert is sulfur co-cured with the tire assembly of said tread and carcass as a whole. Preferably, the insert(s) have a maximum thickness at a location about midway between the bead portions and the tread in the sidewall region of the tire.

In the practice of this invention, a significant function of the rubber composition-based fillers in the sidewall portion of the tire is to stiffen/support the sidewall structure when the tire is operated without inflation pressure.

The rubber composition-based inserts are elastomeric in nature having a substantially crescent cross-sectional shape and material properties selected to enhance inflated ride performance while promoting the tire's run-flat durability. The inserts, if desired, may also be individually reinforced with cords or short fibers. Thus, one or more of such inserts may be so-reinforced.

The shape of the fillers is described as being substantially crescent in shape. This is intended to also include an entrunkated crescent shape, particularly where the entrunkated portion of the crescent-shaped filler is juxtapositioned to the tire's bead portion.

In further practice of the invention, said tire carcass may have from one to three plies comprised of a first axially inner ply and optionally one or two additional plies as a second ply and third ply, respectively; each additional ply positioned sequentially axially outward from said first ply in the sidewall region of the tire.

Accordingly, in accordance with this invention, said tire contains one ply in its carcass wherein said insert is juxtapositioned to and axially inward of said ply in the sidewall region of the tire.

In further accordance with this invention, said tire contains, in its carcass, an axially inner first ply and a second ply axially outward from the first ply; wherein said insert is juxtapositioned to and axially inward of said first ply, in the sidewall region of the tire.

In additional accordance with this invention, said tire contains, in its carcass, an axially inner first ply and an axially outer second ply; wherein said insert is juxtapositioned to and interposed between said first and second ply, in the sidewall region of the tire.

In further accordance with this invention, said tire contains, in its carcass, an axially inner first ply and an axially outer second ply; wherein one of said inserts is juxtapositioned to and interposed between said first and second ply, in the sidewall region of the tire, and another of said inserts is juxtapositioned to and axially inward of said first ply, in the sidewall region of the tire.

In further accordance with this invention, said tire contains, in its carcass, an axially inner first ply, a second ply axially outward from said first ply and a third ply axially outward from said second ply; wherein said insert is juxtapositioned to and axially inward of said first ply, in the sidewall region of the tire.

In additional accordance with this invention, said tire contains, in its carcass, an axially inner first ply, a second ply axially outward from said first ply and a third ply axially outward from said second ply; wherein said insert is juxtapositioned to and interposed between (a) said first and second plies and/or (b) said second and third plies, in the sidewall region of the tire.

In further accordance with this invention, said tire contains, in its carcass, an axially inner first ply, a second ply axially outward from said first ply and a third ply axially outward from said second ply; wherein said insert is juxtapositioned to and interposed between (a) said first and second plies and/or (b) said second and third plies, in the sidewall region of the tire and, also, an insert juxtapositioned to and axially inward of the innermost of said plies.

In one embodiment, the innermost ply, or plies, has synthetic or textile cord reinforcement of polyester, nylon, rayon or aramid, preferably nylon; while the outermost ply preferably has aramid, carbon fiber, fiberglass or metal cord reinforcement, preferably brass and/or zinc-coated steel cords.

Thus, in a preferred embodiment, the first ply has reinforcing cords of nylon, an aramid fiber, and the second and additional plies are steel cords.

The term "ply" is contemplated to include cord reinforced inserts which do not extend entirely from one bead core to the opposite bead core. It is, however, contemplated that at least one ply must extend from bead core to the opposite bead core, preferably a radial ply. A second ply can extend from a bead core to just laterally under one or more of the reinforcing belts of the belt structure.

In one aspect, the outermost ply preferably has cords of a higher modulus (i.e., steel cords) and the innermost ply, or plies, have cords of a lower modulus (i.e., nylon or rayon).

At least one ply, preferably the innermost ply, extended from bead core to bead cord and wraps around the bead core. Alternatively, where two or more plies are used, at least one of the additional plies, while extending from bead core to bead core, does not actually wrap around the bead core.

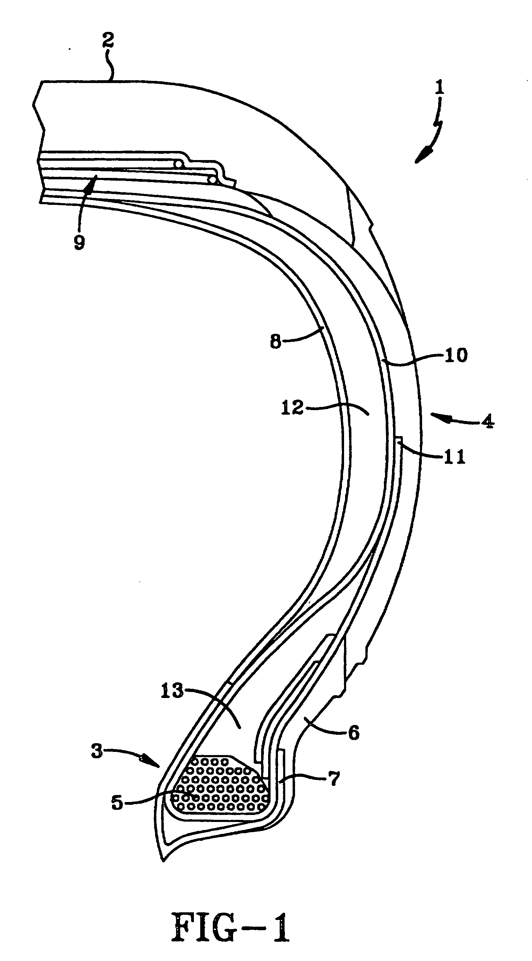

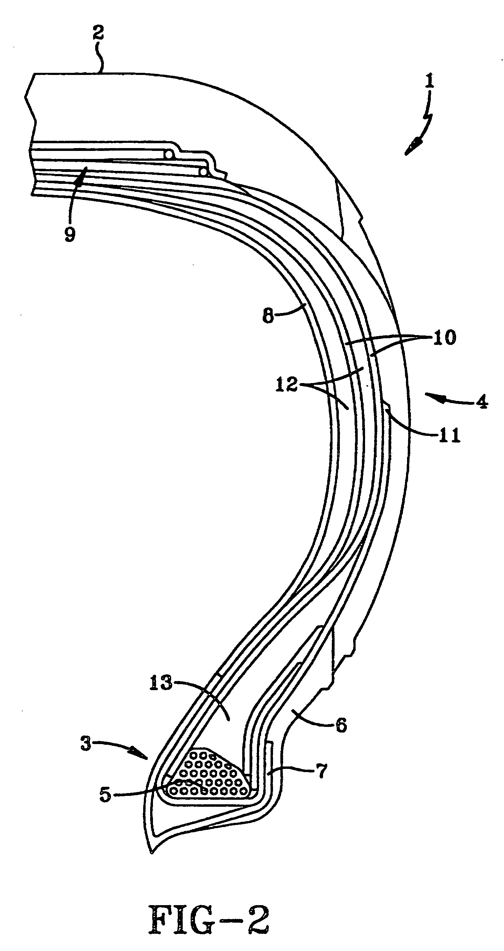

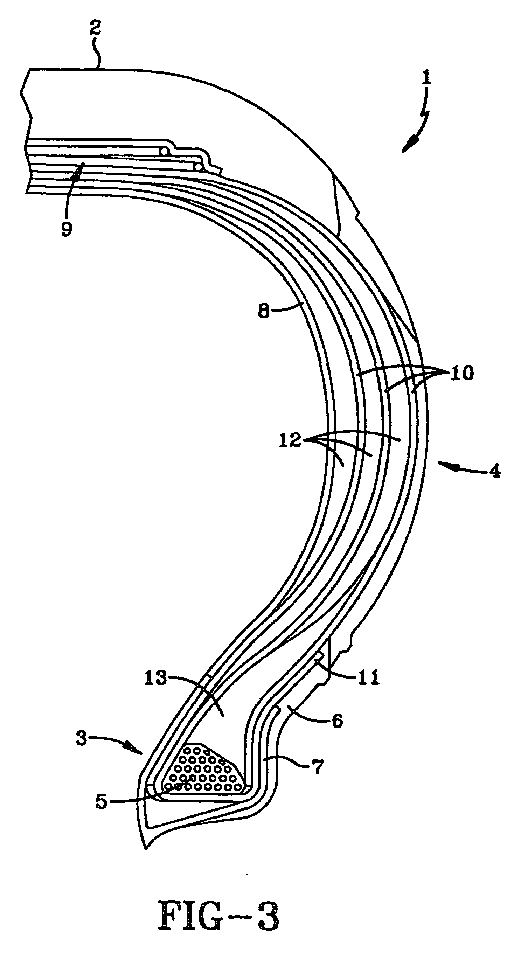

Referring to the drawings, FIGS 1, 2 and 3 show the fragmentary cross-section of a tire 1, its tread 2, bead portion 3, sidewall or sidewall region 4, inextensible wire bead core 5, rubber chafer 6, rubber toeguard 7, rubber composition innerliner 8, belt structure 9 underlying a portion of the tread 2, carcass ply 10, carcass ply turnup 11, insert 12 and apex 13.

The cords for use in the carcass plies may comprise from one (monofilament) to multiple twisted filaments. The number of total filaments in the cord may range from 1 to 13. The cords, particularly metallic cords, of the carcass ply are generally oriented such that the tire according to the present invention is what is commonly referred to as a radial.

The steel cord of the carcass ply intersect the equatorial plane (EP) of the tire at an angle in the range of from 75° to 105°. Preferably, the steel cords intersect at an angle of from 82° to 98°. A more preferred range is from 89° to 91°.

The first and second reinforcing ply structure each may comprise a single ply layer; however, any number of carcass plies may be used. As further illustrated in the Figures, the first ply structure has a pair of turnup ends respectively which wrap about each bead core 5 of the bead portion 3 of the carcass. The ends 11 of the second ply 10 are in proximity to the bead core 5 and terminate radially adjacent on either side of the bead core 5, above the bead core 5 or can be wrapped around the bead core 5 and terminates radially below the turnup end 11 of the first ply 10 as shown. The turnup ends 11 of the first ply 10 wrap about the second ply ends and the bead core 5. The turnup ends of the first ply 11 terminates radially a distance above the nominal rim diameter of the tire 1 in proximity to the radial location of the maximum section width of the tire. In a preferred embodiment, the turnup ends are located within 20 percent of the section height of the tire from the radial location of the maximum section width, most preferably terminating at the radial location of the maximum section width.

The bead core 5 is preferably constructed of a single or monofilament steel wire continuously wrapped. Located within the bead region 3 and the radially inner portions of the sidewall portions 4 are high modulus elastomeric apex inserts disposed between carcass reinforcing structure 11 and the turnup ends 11, respectively. The elastomeric apex inserts 13 extend from the radially outer portion of bead portions respectively, up into the sidewall portion gradually decreasing in cross-sectional width. The elastomeric apex inserts 13 terminate at a radially outer end.

The inserts 12 may extend from each bead region radially to the edge of the tread, usually to just beneath the reinforcing belt structures 9. As illustrated in the Figures, the sidewall portions may each include a first insert 12 and a second insert 12 and even a third insert 12. The first inserts 12 are positioned as described above. The second inserts 12 are located (interposed) between the first and the second plies 10, respectively. The second insert 12 extends from each bead region 3, or portion, radially outward to the edge of the tread 2, namely, to just beneath the reinforcing belt structure 9.

In one embodiment, the first inserts 10 each have a thickness at its maximum thickness of at least three percent of the maximum section height "SH" at a location approximately radially aligned to the maximum section width of the tire.

The second insert, and third insert, if used, has a thickness at its maximum thickness of at least one and one-half percent (1.5%) of the maximum section height of the tire at the location radially above the maximum section width of the tire. In a preferred embodiment, the elastomeric second inserts, and third insert, if used, each have a thickness of approximately one and one-half percent (1.5%) of the maximum section height SH of the tire at a radial location of about 75 percent of the section height SH. For example, in a P275/40ZR17-size high performance tire, this thickness of the second insert of the tire equals 0.08 inches (2 mm). At the location approximately radially aligned with the location of the maximum section width of the tire, the thickness of the second insert is 0.05 inches (1.3 mm).

The overall cross-sectional thickness of the combination of elastomeric inserts preceding from the bead portions to the radial location of the maximum section width (SW) is preferably of constant thickness. The overall sidewall and carcass thickness is at least 0.45 inches (11.5 mm) at the maximum section width location and increases to an overall thickness in the region where it merges into the shoulder near the lateral tread edges. Preferably, the overall thickness of the sidewall in the shoulder region of the tire is at least one hundred percent (100%) of the overall sidewall thickness at the maximum section width (SW). This ratio means that the sidewall can be made substantially thinner than the predecessor-type runflat tires.

As previously discussed, the tire of the present invention has at least one ply having a turnup end 11 (wrapped around the bead core 5) while another ply can simply be terminated adjacent to the bead core 5 without actually wrapping around the bead core 5.

The first insert 12 is preferably made of elastomeric material. The first insert 12 is designed to prevent the tire's sidewall from collapsing when operating under no inflation pressure. The insert 12 can be of a wide range of shore A hardnesses from a relative soft shore A of about 50 to very hard 85, the material shape and cross-sectional profile is modified accordingly to insure the ride performance and sidewall spring rate is acceptable. The cross-sectional area of the insert can be reduced without compromising performance characteristics by utilizing stiffer materials in the insert. Thus, weight can be reduced by using stiffer materials in the insert.

The second insert 12, and third insert 12, if used, can be of the same or different material physical properties relative to the first insert. This means that the combination of a hard second insert 12, and/or third insert 12, if used, with a softer first insert 12 is contemplated as well as the combination of a hard first insert 12 with a softer second and/or third insert 12. The elastomeric materials of the second insert may similarly be in the 50 to 85 shore A range.

The second insert 12 and third insert 12, if used, as shown in the Figures, is made of elastomeric material. These inserts 12 can be used in multiples of inserts interposed between adjacent plies when more than two plies are used in the carcass structure.

The second inserts 12, and third inserts 12, when used, act as a spacer between the adjacent plies. The cords of the plies particularly the radially outer ply is placed in tension when the tire is operated uninflated.

In practice, the rubber compositions for the inserts 12 utilized in this invention for the aforesaid pneumatic tire construction are preferably characterized by physical properties which enhance their utilization in the invention which are, collectively, believed to be a departure from properties of rubber compositions normally used in pneumatic tire sidewalls, particularly the combination of inserts 12 and with plies 10 having a combination of either dissimilar or similar high stiffness yet essentially low hysteresis properties.

In particular, for the purposes of this invention, the aforesaid inserts 12 are designed to have a high degree of stiffness yet also having a relatively low hysteresis for such a degree of stiffness. This enabled the benefits of the change in moduli of the reinforcing cords to be fully appreciated.

The stiffness of the rubber composition for inserts 12 is desirable for stiffness and dimensional stability of the tire sidewall 4. A similar stiffness of the rubber composition for the ply coat for one or more of plies is desirable for overall dimensional stability of the tire carcass, including its sidewalls, since it extends through both sidewalls and across the crown portion of the tire.

However, it is to be appreciated that rubbers with a high degree of stiffness in pneumatic tires normally be expected to generate excessive internal heat during service conditions (operating as tires on a vehicle running under load and/or without internal inflation pressure), particularly when the rubber's stiffness is achieved by a rather conventional method of simply increasing its carbon black content. Such internal heat generation within the rubber composition typically results in a temperature increase of the stiff rubber and associated tire structures which can potentially be detrimental to the useful life of the tire 1.

The hysteresis of the rubber composition is a measure of its tendency to generate internal heat under service conditions. Relatively speaking, a rubber with a lower hysteresis property generates less internal heat under service conditions than an otherwise comparable rubber composition with a substantially higher hysteresis. Thus, in one aspect, a relatively low hysteresis is desired for the rubber composition for the fillers and the plycoat(s) for one or more of the plies 10.

Hysteresis is a term for heat energy expended in a material (e.g., cured rubber composition) by applied work and low hysteresis of a rubber composition is indicated by a relatively high rebound and relatively low tangent delta (Tan Delta) property values.

Accordingly, it is important that the rubber compositions for one or more of the inserts 12 and plycoats for one or more of plies 10 have the properties of both relatively high stiffness and low hysteresis.

It should readily be understood by one having skill in the art that rubber compositions for components of the pneumatic tire, including the fillers can be compounded by methods generally known in the rubber compounding art, such as mixing the various sulfur-vulcanizable constituent rubbers with various commonly used additive materials such as, for example, curing aids, such as sulfur, activators, retarders and accelerators, processing additives, such as rubber processing oils, resins including tackifying resins, silicas and plasticizers, fillers, pigments, or other materials such as tall oil resins, zinc oxide, waxes, antioxidants and antiozonants, peptizing agents and reinforcing materials such as, for example, carbon black. As known to those skilled in the art, depending on the intended use of the sulfur vulcanizable and sulfur-vulcanized materials (rubbers), the certain additives mentioned above are selected and commonly used in conventional amounts.

Typical additions of carbon black comprise about 20 to about 100 parts by weight, of diene rubber (phr), although about 30 to about a maximum of about 110 phr of carbon black is desirable for the high stiffness rubbers desired for the indicated fillers and plycoat(s) used in this invention. In most cases, it is preferred to employ about 70 phr to about 90 phr of filler in the insert compounds of this invention. Typical amounts of resins, if used, including tackifier resins and stiffness resins, if used, including unreactive phenol formaldehyde tackifying resins and, also stiffener resins of reactive phenol formaldehyde resins and resorcinol or resorcinol and hexamethylene tetramine, may collectively comprise about 1 to 10 phr, with a minimum tackifier resin, if used, being 1 phr and a minimum stiffener resin, if used, being 3 phr. Such resins may sometimes be referred to as phenol formaldehyde-type resins. Typical amounts of processing aids comprise about 4 to about 10.0 phr. Typical amounts of silica, if used, comprise about 5 to about 50, although 5 to about 15 phr is desirable, and amounts of silica coupling agent, if used, comprise about 0.05 to about 0.25 parts per part of silica, by weight. Representative silicas may be, for example, hydrated amorphous silicas. A representative coupling agent may be, for example, a bifunctional sulfur containing organo silane such as, for example, bis-(3-triethoxy-silylpropyl) tetrasulfide, bis-(3-trimethoxy-silylpropyl) tetrasulfide and bis-(3-trimethoxy-silylpropyl) tetrasulfide grafted silica from DeGussa, AG. Typical amounts of antioxidants comprise 1 to about 5 phr. Representative antioxidants may be, for example, diphenyl-p-phenylenediamine and others, such as those disclosed in The Vanderbilt Rubber Handbook (1978), pages 344-346. Suitable antiozonant(s) and waxes, particularly microcrystalline waxes, may be of the type shown in The Vanderbilt Rubber Handbook (1978), pages 346-347. Typical amounts of antiozonants comprise 1 to about 5 phr. Typical amounts of stearic acid and/or tall oil fatty acid may comprise about 1 to about 3 phr. Typical amounts of zinc oxide comprise about 2 up to about 8 or 10 phr. Typical amounts of waxes comprise 1 to about 5 phr. Typical amounts of peptizers comprise 0.1 to about 1 phr. The presence and relative amounts of the above additives are not an aspect of the present invention, so long as the hardness and modulus value requirements of the filler(s) used in the tire sidewalls in the practice of this invention.

The vulcanization of the rubber composition(s) is/are conducted in the presence of a sulfur vulcanizing agent. Examples of suitable sulfur vulcanizing agents include elemental sulfur (free sulfur) or sulfur donating vulcanizing agents, for example, an amine disulfide, polymeric polysulfide or sulfur olefin adducts. Preferably, the sulfur vulcanizing agent is elemental sulfur. As known to those skilled in the art, sulfur vulcanizing agents are used in an amount ranging from about 0.5 to about 8 phr with a range of from 2 to about 5 being preferred for the stiff rubbers desired for use in this invention.

Accelerators are used to control the time and/or temperature required for vulcanization and to improve the properties of the vulcanizate. In one embodiment, a single accelerator system may be used; i.e., primary accelerator. Conventionally, a primary accelerator is used in amounts ranging from about 0.5 to about 3 phr. In another embodiment, combinations of two or more accelerators in which a primary accelerator is generally used in the larger amount (0.5 to about 2 phr), and a secondary accelerator which is generally used in smaller amounts (0.05-.50 phr), in order to activate and to improve the properties of the vulcanizate. Combinations of such accelerators have historically been known to produce a synergistic effect of the final properties of sulfur-cured rubbers and are often somewhat better than those produced by use of either accelerator alone. In addition, delayed action accelerators may be used which are less affected by normal processing temperatures but produce satisfactory cures at ordinary vulcanization temperatures. Representative examples of accelerators include amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound, although a second sulfenamide accelerator may be used. In the practice of this invention, one and sometimes two or more accelerators are preferred for the high stiffness rubbers.

The runflat tire containing the inserts of this invention can be built, shaped, molded and cured by various methods which will be readily apparent to those having skill in the art. In general, the runflat tires of this invention can be manufactured using standard techniques with, of course, the exception that the insert therein contains 1,3-bis(citraconimidomethyl) benzene as an antireversion agent in addition to the rubbery polymer.

In a preferred embodiment, the insert of this invention is incorporated into a runflat tire of the design described in Goodyear Docket No. DN1998-091 filed on June 19, 1998 WO 99/65711 published the 23.12,1999. This design relates to a pneumatic radial ply runflat tire having a tread, a carcass comprising a radial ply structure having at least one radial ply, a belt structure located between the tread and the radial ply structure, two sidewalls reinforced by one or more inserts and a tread contour of which the laterally disposed tread ribs are defined by circular curves having large radii of curvature. The outermost ply, or the single ply, is reinforced with inextensible metal cords. The sidewalls each having a rib near the radially outermost regions. The circular curves that define the cross-section contour of the central portions of the tread and the laterally disposed tread rib intersect nontangentially. A circumferentially disposed decoupling groove underlies each respective nontangential locus of points of nontangential intersection of the circular curves that define the cross-section contour of the tread. The circular curve defining the contour of each radially outward-most sidewall rib intersects nontangentially with the circular curve that defines the contour of each laterally disposed tread rib. A second set of decoupling grooves is disposed such that one groove is located circumferentially in each shoulder region where the contour-defining curves intersect nontangentially between each radially disposed sidewall rib and the adjacent laterally disposed tread rib. The lateral-most decoupling grooves between the laterally disposed tread rib and the sidewall rib are circumferential and continuous, or they are circumferential and non-continuous. The decoupling grooves between the laterally disposed tread rib and the central portions of the tread are circumferential and straight in design, or they have a zig-zagged pattern. In a preferred embodiment, the runflat tire is a pneumatic radial having a low-aspect-ratio (in the range of about 30 percent to about 60 percent) design. This embodiment has potential for runflat use in high-performance sports-type vehicles or light trucks. The distinctive feature of this low-aspect-ratio, radial ply runflat pneumatic tire is that runflat tread lift is minimized and that tread footprint is widened during runflat operation.

In another preferred embodiment, the insert of this invention is incorporated into a runflat tire of the design described in Goodyear Docket No. DN1998-065, filed on July 6, 1998 WO 00/01543 published the 13.01.00 This design relates to a pneumatic radial ply runflat tire having a tread, a casing with two sidewalls, two radial plies extending from two annular beads and a belt reinforcement structure located radially between the tread and the plies. This runflat sidewall design is characterized by an inner radial ply having metal reinforcement cords and an outer radial ply having organic fiber reinforcement cords. An insert is circumferentially disposed between the inner and outer plies in the region of each sidewall adjacent to the tread shoulder. The insert in each sidewall has properties characterized by high tensile strength, low hysteresis and light weight. The strength and rigidity of the insert can be adjusted by the incorporation of organic fibers aligned more or less in the radial direction within the insert. Metal reinforcing cords in the inner radial ply have properties characterized by a high modulus of elasticity, rigidity with respect to carrying the compressive load on the inserts during runflat operation and good thermal conductivity which distributes heat generated within the inserts during runflat operation. During runflat operation, the high modulus of the reinforcing metal cords of the inner ply carry a substantial compressive load, thereby reducing the compression load carried by the single insert in each sidewall. It should also be noted that, during runflat operation, the outer organic fiber reinforced ply has good flexibility accompanied by high tensile-stress-bearing capacity. In this design, it is preferred for the inner radial ply to have metallic cords at an angle of from about 75° to about 105° with respect to the equatorial plane of the tire. It is also desirable for the insert to be filled with short reinforcing fibers which are aligned primarily in the radial direction to increase the tensile-stress-bearing capacity of the insert.

In still another preferred embodiment of this invention, the insert is incorporated into a runflat tire of the design described in United States Patent Application Serial No. 08/865,489, filed May 29, 1997 (US-A-5871600 published the 16.02.99). This design relates to a tire having a tread, a belt structure and a carcass. The carcass has a pair of sidewalls with each sidewall having at least one ply or being reinforced with cords having a modulus of at least 10 GPa. In this tire design, at least one ply has a pair of turnup ends wrapped around a pair of inextensible bead cores. Each sidewall structure has at least one insert radially inward of the first ply and a second ply extending at least to each bead core. In this structure, the second ply is spaced from the first ply by a second insert in the sidewall. At least one ply in this tire structure is reinforced with substantially inextensible cords having a modulus greater than the modulus of the other ply. When loaded, this tire has a neutral axis of bending of the sidewall structure closer in proximity to the ply reinforced with cords of a higher modulus than to the ply reinforced with cords of the lower modulus. In a highly preferred embodiment, the first ply has synthetic or textile cords of polyester, nylon, rayon or aramid; while the second ply, most preferably, has aramid cords or metal cords; most preferably, steel cords. The first and second inserts preferably have a cross-sectional shape and material properties selected to enhance inflated ride performance while insuring runflat durability. The inserts can also be reinforced with cords or short fibers.

This invention is illustrated by the following examples which are merely for the purpose of illustration and are not to be regarded as limiting the scope of the invention or the manner in which it can be practiced. Unless specifically indicated otherwise, parts and percentages are given by weight.

### Example 1

In this example, a coupled isoprene-butadiene rubber (IBR) which was suitable for utilization in the tire inserts of this invention was prepared in a one-gallon (3.8 liters) batch reactor at 70°C. In the procedure used, 2,000 grams of a silica/molecular sieve/aluminum dried premix containing 19.0 weight percent of a mixture of isoprene and 1,3-butadiene in hexanes at the ratio of 10:90 was charged into a one-gallon (3.8 liters) reactor. After the amount of impurity in the premix was determined, 4.0 ml of a 1.0 M solution of n-butyl lithium (in hexane) was added to the reactor. The target Mn (number averaged molecular weight) was 100,000. The polymerization was allowed to proceed at 70°C for three hours. An analysis of the residual monomer indicated that monomers were all consumed. Then, 1.0 ml of a 1 M solution of tin tetrachloride (in hexane) was added to the reactor and the coupling reaction was carried out at the same temperature for 30 minutes. At this time, 1.5 phr (parts per 100 parts by weight of rubber) of 4-t-butylcatechol and 0.5 phr of TMEDA was added to the reactor to shortstop the polymerization and to stabilize the polymer.

After the hexane solvent was evaporated, the resulting SIBR was dried in a vacuum oven at 50°C. The coupled IBR was determined to have a glass transition temperature (Tg) at -95°C. It was also determined to have a microstructure which contained 7 percent 1,2-polybutadiene units, 87 percent 1,4-polybutadiene units, 1 percent 3,4-polyisoprene units and 9 percent 1,4-polyisoprene units. The Mooney viscosity (ML-4) of the coupled IBR made was determined to be 99.

### Example 2

In this experiment, two P225/60R16 runflat tires were built utilizing an insert that contained 2 phr of Perkalink 900 1,3-bis(citraconimidomethyl) benzene and compared with identical runflat tires that did not contain the 1,3-bis(citraconimidomethyl) benzene. The inserts utilized in these tires contained 80 phr (parts by weight per 100 parts by weight of rubber) of natural rubber and 20 phr of Budene®1207 high cis-1,4-polybutadiene rubber. The tires were mounted on a 1995 Ford Crown Victoria and tested for runflat durability after being deflated. The tires made utilizing the 1,3-bis(citraconimidomethyl) benzene in their inserts went 514 miles (827 km) and 516 miles (830 km) before failure. The tires made without the 1,3-bis(citraconimidomethyl) benzene went only 150 miles (241 km) and 200 miles (322 km) until failure occurred. Thus, the utilization of the bis-citraconimido compound in the inserts more than doubled the extended mobility range of the runflat tires after total loss of air pressure.

Variations in the present invention are possible in light of the description of it provided herein. While certain representative embodiments and details have been shown for the purpose of illustrating the subject invention, it will be apparent to those skilled in this art that various changes and modifications can be made therein without departing from the scope of the claims. It is, therefore, to be understood that changes can be made in the particular embodiments described which will be within the full intended scope of the following appended claims.

## Claims

1. A runflat tire (1) which includes a generally toroidal-shaped carcass with an outer circumferential tread (2), two spaced beads (3), at least one ply (10) extending from bead to bead and sidewalls extending radially from and connecting said tread to said beads, wherein said tread is adapted to be ground contacting and wherein said sidewalls contain at least one insert (12) radially inward from said ply, **characterized in that** the insert is comprised of a rubbery polymer and a bis-citraconimido compound.

2. A runflat tire as specified in claim 1 **characterized in that** the bis-citraconimido compound is 1,3-bis(citraconimidomethyl) benzene and **characterized in that** the 1,3-bis(citraconimidomethyl) benzene is present in an amount which is within the range of 0.1 phr to 10 phr.

3. A runflat tire as specified in claim 2 **characterized in that** the insert is comprised of (1) a cured polydiene rubber that is coupled with a Group IVa metal selected from the group consisting of tin, lead, germanium and silicon, (2) from 20 phr to 130 phr of a filler, (3) from 0.1 phr to 5 phr of a fatty acid and (4) 0.1 phr to 10 phr of the 1,3-bis(citraconimidomethyl) benzene.

4. The runflat tire specified in claim 2 or 3 **characterized in that** the 1,3-bis(citraconimidomethyl) benzene is present in an amount which is within the range of 0.5 phr to 5 phr.

5. The runflat tire specified in claim 2 or 3 **characterized in that** the 1,3-bis(citraconimidomethyl) benzene is present in an amount which is within the range of 1 phr to 3 phr.

6. The runflat tire specified in any of claims 2-5 **characterized in that** the filler is carbon black.

7. The runflat tire specified in any of claims 2-6 **characterized in that** the fatty acid is stearic acid.

8. The runflat tire specified in any of claims 2-7 **characterized in that** the fatty acid is present at a level which is within the range of 0.4 phr to 3 phr.

9. The runflat tire specified in any of claims 2-8 **characterized in that** the cured polydiene rubber is coupled with tin.

10. The runflat tire specified in any of claims 2-8 **characterized in that** the insert is a composition of matter that is further comprised of natural rubber, wherein the insert contains from 10 phr to 70 phr of natural rubber, based upon the total amount of rubber in the insert, wherein the carbon black is present at a level which is within the range of 70 phr to 90 phr, wherein the stearic acid is present at a level which is within the range of 0.5 phr to 1.5 phr and wherein the cured polydiene rubber is a styrene-butadiene rubber.

## Patentansprüche

1. Reifen (1) mit Notlaufeigenschaften, welcher eine im allgemeinen toroidale Karkasse mit einer Außenumfangslauffläche (2), zwei beabstandeten Wülsten (3), mindestens einer Lage (10), die sich von Wulst zu Wulst erstreckt, und Seitenwänden, die sich radial von der Lauffläche zu den Wülsten erstrecken und diese verbinden, umfasst, wobei die Lauffläche für den Bodenkontakt ausgelegt ist und wobei die Seitenwände mindestens eine Einlage (12) radial einwärts von der Lage enthalten, **dadurch gekennzeichnet, dass** die Einlage ein kautschukartiges Polymer und eine Biscitraconimido-Verbindung umfasst.

2. Reifen mit Notlaufeigenschaften gemäß Anspruch 1, **dadurch gekennzeichnet, dass** die Biscitraconimido-Verbindung 1,3-Bis(citraconimidomethyl)benzol ist, und **dadurch gekennzeichnet, dass** das 1,3-Bis(citraconimidomethyl)benzol in einer Menge vorhanden ist, die im Bereich von 0,1 ThK bis 10 ThK liegt.

3. Reifen mit Notlaufeigenschaften gemäß Anspruch 2, **dadurch gekennzeichnet, dass** die Einlage (1) einen vulkanisierten Polydienkautschuk, der mit einem Metall der Gruppe IVa ausgewählt aus der Gruppe bestehend aus Zinn, Blei, Germanium und Silicium gekuppelt ist, (2) 20 ThK bis 130 ThK eines Füllstoffs, (3) 0,1 ThK bis 5 ThK einer Fettsäure und (4) 0,1 ThK bis 10 ThK 1,3-Bis(citraconimidomethyl)benzol umfasst.

4. Reifen mit Notlaufeigenschaften gemäß Anspruch 2 oder 3, **dadurch gekennzeichnet, dass** das 1,3-Bis(citraconimidomethyl)benzol in einer Menge vorhanden ist, die im Bereich von 0,5 ThK bis 5 ThK liegt.

5. Reifen mit Notlaufeigenschaften gemäß Anspruch 2 oder 3, **dadurch gekennzeichnet, dass** das 1,3-Bis(citraconimidomethyl)benzol in einer Menge vorhanden ist, die im Bereich von 1 ThK bis 3 ThK liegt.

6. Reifen mit Notlaufeigenschaften gemäß irgendeinem der Ansprüche 2 bis 5, **dadurch gekennzeichnet, dass** der Füllstoff Ruß ist.

7. Reifen mit Notlaufeigenschaften gemäß irgendeinem der Ansprüche 2 bis 6, **dadurch gekennzeichnet, dass** die Fettsäure Stearinsäure ist.

8. Reifen mit Notlaufeigenschaften gemäß irgendeinem der Ansprüche 2 bis 7, **dadurch gekennzeichnet, dass** die Fettsäure mit einem Gehalt vorhanden ist, der im Bereich von 0,4 ThK bis 3 ThK liegt.

9. Reifen mit Notlaufeigenschaften gemäß irgendeinem der Ansprüche 2 bis 8, **dadurch gekennzeichnet, dass** der vulkanisierte Polydienkautschuk mit Zinn gekuppelt ist.

10. Reifen mit Notlaufeigenschaften gemäß irgendeinem der Ansprüche 2 bis 8, **dadurch gekennzeichnet, dass** die Einlage eine Mischung ist, die femer Naturkautschuk umfasst, wobei die Einlage 10 ThK bis 70 ThK Naturkautschuk, bezogen auf die Gesamtmenge an Kautschuk in der Einlage, enthält, wobei der Ruß mit einem Gehalt vorhanden ist, der im Bereich von 70 ThK bis 90 ThK liegt, wobei die Stearinsäure mit einem Gehalt vorhanden, der im Bereich von 0,5 ThK bis 1,5 ThK liegt, und wobei der vulkanisierte Polydienkautschuk ein Styrol-Butadien-Kautschuk ist.

## Revendications

1. Pneu (1) pour roulage à plat, qui comprend une carcasse de forme globalement toroïdale, comportant une bande de roulement (2) disposée sur sa circonférence externe, deux talons (3) espacés l'un de l'autre, au moins un pli (10) s'étendant d'un talon à l'autre, et des flancs qui s'étendent dans la direction radiale depuis ladite bande de roulement jusqu'auxdits talons et qui relient ceux-ci à celle-là, et dans lequel ladite bande de roulement est adaptée pour rester en contact avec le sol et lesdits flancs contiennent au moins un insert (12) qui s'étend vers l'intérieur dans la direction radiale depuis ledit pli, **caractérisé en ce que** cet insert est constitué d'un polymère caoutchouteux et d'un composé de type bis-citraconimide.

2. Pneu pour roulage à plat, conforme à la revendication 1, **caractérisé en ce que** le composé de type bis-citraconimide est du 1,3-bis(citracon-imidométhyl)benzène, et **en ce que** ce 1,3-bis(citraconimidométhyl)benzène se trouve présent en une proportion de 0,1 à 10 pcpr (parties pour cent parties de résine).

3. Pneu pour roulage à plat, conforme à la revendication 2, **caractérisé en ce que** l'insert est constitué
a) d'un caoutchouc de polydiène durci, couplé avec un métal du groupe IVa choisi parmi l'étain, le plomb, le germanium et le silicium,
b) de 20 à 130 pcpr d'une charge,
c) de 0,1 à 5 pcpr d'un acide gras,
d) et de 0,1 à 10 pcpr de 1,3-bis(citraconimidométhyl)benzène.

4. Pneu pour roulage à plat, conforme à la revendication 2 ou 3, **caractérisé en ce que** le 1,3-bis(citraconimidométhyl)benzène se trouve présent en une proportion de 0,5 à 5 pcpr.

5. Pneu pour roulage à plat, conforme à la revendication 2 ou 3, **caractérisé en ce que** le 1,3-bis(citraconimidométhyl)benzène se trouve présent en une proportion de 1 à 3 pcpr.

6. Pneu pour roulage à plat, conforme à l'une des revendications 2 à 5, **caractérisé en ce que** la charge est un noir de carbone..

7. Pneu pour roulage à plat, conforme à l'une des revendications 2 à 6, **caractérisé en ce que** l'acide gras est de l'acide stéarique.

8. Pneu à flancs renforcés, conforme à l'une des revendications 2 à 7, **caractérisé en ce que** l'acide gras se trouve présent en une proportion de 0,4 à 3 pcpr.

9. Pneu à flancs renforcés, conforme à l'une des revendications 2 à 8, **caractérisé en ce que** le caoutchouc de polydiène durci est couplé avec de l'étain.

10. Pneu à flancs renforcés, conforme à l'une des revendications 2 à 8, **caractérisé en ce que** l'insert est fait d'une composition de matière qui comporte en outre du caoutchouc naturel en une quantité qui représente de 10 à 70 pcpr de la quantité totale de caoutchouc contenue dans l'insert, dans laquelle il y a de 70 à 90 pcpr de noir de carbone et de 0,5 à 1,5 pcpr d'acide stéarique, et dans laquelle le caoutchouc de polydiène durci est un caoutchouc à base de styrène et de butadiène.
